Europäisches Patentamt

European Patent Office

Office européen des brevets

(11) Numéro de publication: **0 027 096**
**A1**

(12) **DEMANDE DE BREVET EUROPEEN**

(21) Numéro de dépôt: **80450005.6**

(22) Date de dépôt: **03.10.80**

(51) Int. Cl.³: **C 05 F 3/00,** C 05 F 11/00,
**A 01 G 1/04**

---

(30) Priorité: **05.10.79 FR 7925278**

(43) Date de publication de la demande: **15.04.81**
**Bulletin 81/15**

(84) Etats contractants désignés: **AT BE CH DE GB IT LI LU NL SE**

(71) Demandeur: **SOCIETE DE PRODUITS AGRICOLES DESHYDRATES S.A. (S.P.A.D.), 8, passage Sarget, F-33000 Bordeaux (FR)**

(72) Inventeur: **Gendre, Régis, 7, rue Henri Expert, F-33000 Bordeaux (FR)**

(74) Mandataire: **Trolliet, Jean-Claude, Cabinet BURDIPAT 20, cours du Chapeau Rouge, F-33000 Bordeaux (FR)**

---

(54) **Procédé d'obtention de substrat et compost déshydraté pour la culture de champignons de couche.**

(57) L'invention concerne un procédé d'obtention de substrat et compost déshydraté à base de fumier de cheval pour la culture de champignons de couche.

Le procédé consiste à soumettre le fumier frais à une température comprise entre 70 à 90° C de sorte à obtenir un produit ayant une teneur en eau inférieure à 15 %, à le broyer afin de provoquer l'éclatement des pailles puis à calibrer lesdites pailles, le fumier est alors introduit dans une mélangeuse ainsi que les additifs nécessaires à la composition du substrat et compost dans les proportions voulues selon la nature du fumier, après mélange et homogénéisation le substrat et compost est conditionné.

1
## Procédé d'obtention de substrat et compost déshydraté
## pour la culture de champignons de couche

La présente invention est relative à un procédé d'obtention de substrat et compost déshydraté à base de fumier de cheval pour la culture de champignons de couche, à innoculer ou innoculé.

On connaît l'obtention de substrat et compost de culture de champignons de couche à base de fumier de cheval par méthode traditionnelle se décomposant en deux phases principales, la première d'homogénéisation dite de compostage consistant à humidifier le fumier jusqu'à ce qu'il atteigne une teneur de 72 à 75% d'humidité afin d'accélérer sa fermentation, à l'additionner d'éléments riches en azote tel que farine de plumes de volaille, etc. et des éléments riches en carbonate et/ou sulfate de calcium favorisant les fermentations et l'envahissement du mycélium, à le retourner régulièrement afin d'aérer et homogénéiser ses constituants et les éléments ajoutés durant une période pouvant varier de dix-huit à vingt-cinq jours selon la nature et l'état de vieillissement dudit fumier mis en œuvre, cette fermentation qui est une fermentation chaude entraîne le développement de bactéries, actinomycètes et champignons termophyles engendrant la dégradation des pailles tout en éliminant les compétiteurs mésophiles. Aprés cette homogénéisation la deuxième phase dite de pasteurisation ou fermentation dirigée et contrôlée est mise en œuvre, elle consiste à disposer le fumier homogénéisé dans une chambre chaude et isolée climatiquement afin qu'à l'aide de vapeur vive le fumier soit porté à une température de l'ordre de 60°C durant vingt-quatre heures de sorte à détruire les nématodes, cette destruction entraîne le développement de bactéries favorisant la création d'azote ammoniacal préjudiciable au développement du champignon de couche, afin de transformer cet azote ammoniacal la température du fumier est progressivement abaissée à 55°C ce qui a pour effet de provoquer le développement des actinomycètes puis à 50-52°C phase de développement des champignons termophyles tels que Humicolas, Torulas, etc., durant cette opération l'azote ammoniacal est transformé en forme protéique, cette deuxième phase dure de six à neuf jours selon les exploitations et le substrat et compost obtenu est utilisable pour ensemencement aprés être refroidi à 25°C.

Ce procédé présente certains inconvénients notamment durant la phase d'homogénéisation dite de compostage, relativement longue, la fermentation entraîne la matière à se consumer dans des proportions de l'ordre de 40 à 50%, selon cette méthode l'obtention du substrat et compost nécessite son utilisation immédiate, le stockage n'étant pas possible étant donné que la matière se consume d'elle-même, de même que le stockage de fumier frais n'est pas conseillé à cause de sa fermentation entraînant une consumation naturelle de matière.

Le procédé d'obtention de substrat et compost objet de l'invention permet d'éviter les inconvénients précédemment exposés, il permet de supprimer la phase d'homogénéisation dite compostage ce qui a pour effet d'abaisser le temps d'obtention du substrat et compost empéchant en outre que la matière se consume d'elle même et permet la conservation du substrat et compost dans le temps.

Le procédé selon l'invention permettant l'obtention du substrat et compost déshydraté à innoculer ou innoculé consiste à soumettre le fumier frais à une température comprise entre 70 à 90°C afin de détruire les toxines nuisibles à la culture du champignon, favoriser les transformations de substances nutritives du champignon et évaporer l'eau contenue dans le fumier frais de manière à obtenir un produit ayant une teneur en eau inférieure à 15% puis à refroidir le fumier de façon à éviter la condensation durant les traitements ultérieurs de mélange et conditionnement, le fumier est ensuite dirigé vers un broyeur afin de provoquer l'éclatement des pailles et des mottes éventuelles de crottin, il est alors dirigé vers une grille à mailles pouvant varier de 20 à 50mm permettant la coupe et le calibrage des pailles afin d'obtenir lors de l'utilisation une trés bonne humidification et de ce fait une trés bonne fermentation, aprés cette opération le fumier est introduit dans une mélangeuse ainsi que les additifs nécessaires à la composition du substrat et compost dans des proportions voulues selon la nature du fumier notamment des éléments riches en azote tel que farine de plumes de volaille, etc.. et des éléments riches en carbonate et/ou sulfate de calcium tel que plâtre, le fumier et additifs sont mélangés et homogénéisés puis sont conditionnés.

Le substrat et compost conditionné peut être utilisé à n'importe quel moment, il est nécessaire lors de son utilisation de mélanger un innoculum frais tel que fumier frais dans des proportions de 5 à 15% puis de mouiller le substrat déshydraté jusqu'à l'obtention d'une teneur en humidité de 72 à 75% afin de déclencher sa fermentation, une fois cette dernière déclenchée il est nécessaire de procéder à la phase de pasteurisation ou fermentation dirigée et contrôlée selon la méthode connue.

Suivant une variante, il est possible d'introduire dans le substrat et compost déshydraté comportant les additifs nécessaires à sa composition et avant son conditionnement, un innoculum tel que fumier de cheval déshydraté à des températures inférieures à 60°C afin que les éléments biochimiques de fermentation ne soient pas détruits de manière à provoquer lors du mouillage l'activation de la fermentation avant de procéder à la phase de pasteurisation ou fermentation dirigée et contrôlée.

Selon la nature du produit de base variant suivant les sources de provenance, les qualités de paille, les changements de litière, vieillissement, etc.. et de sorte à obtenir un substrat et compost final déshydraté ayant une composition chimique en pourcentage de matière sèche voisine sur le plan minéral de : $N = 2$, $P 205 = 1$, $K 20 = 2,5$ et ayant les qualités physiques nécessaires au déroulement des fermentations et à un bon envahissement mycélien, les pourcentages des produits contenus dans la composition peuvent varier, notamment pour un substrat et compost à innoculer :

Fumier déshydraté ...................... 83 à 86 %

Farine de plumes de volaille ou équivalents .. 2, 50 à 3 %

Plâtre ou équivalents .................... 14, 5 à 11 %

pour un substrat et compost innoculé les pourcentages des produits sont

Fumier déshydraté ...................... 78 à 71 %

Innoculum ............................. 5 à 15 %

Farine de plumes de volaille ou équivalents.. 2, 50 à 3 %

Plâtre ou équivalents .................... 15, 50 à 11 %

Revendications

1°) Procédé d'obtention de substrat et compost déshydraté à base de fumier de cheval pour la culture de champignons de couche caractérisé en ce qu'il consiste à soumettre le fumier frais à une température comprise entre 70 et 90°C afin de détruire les toxines nuisibles à la culture du champignon, favoriser les transformations de substances nutritives du champignon et évaporer l'eau contenue dans le fumier frais de manière à obtenir un produit ayant une teneur en eau inférieure à 15%, à refroidir le produit afin d'éviter les condensations, le fumier est ensuite dirigé vers un broyeur afin de provoquer l'éclatement des pailles et des mottes éventuelles de crottin, il passe ensuite au travers d'un calibreur permettant la coupe des pailles et il est introduit dans une mélangeuse avec les additifs nécessaires à la composition du substrat et compost puis il est conditionné.

2°) Substrat et compost déshydraté selon le procédé décrit dans la revendication 1 caractérisé par les pourcentages des produits contenus dans la composition selon la nature du fumier utilisé variant de : fumier déshydraté 83 à 86%, éléments riches en azote 2,5 à 3%, éléments riches en carbonate et/ou sulfate de calcium 11 à 14,5%.

3°) Substrat et compost déshydraté selon le procédé décrit revendication 1 caractérisé par l'adjonction d'un innoculum déshydraté.

4°) Substrat et compost déshydraté selon le procédé décrit revendication 3 caractérisé par l'innoculum étant du fumier de cheval déshydraté à des températures inférieures à 60°C.

5°) Substrat et compost déshydraté selon le procédé décrit revendication 1 et la revendication 4 caractérisé par la composition innoculée comportant des pourcentages de produits compris entre : fumier déshydraté 71 à 78%, innoculum 5 à 15%, éléments riches en azote 2,5 à 3%, éléments riches en carbonate et/ou sulfate de calcium 11 à 15,5%.

**Office européen des brevets**

**RAPPORT DE RECHERCHE EUROPEENNE**

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 741 847 (THE PENNSYL-VANIA STATE COLLEGE) <br> * Page 1, lignes 14-38; page 5, résumé 1,2 * <br><br>-- | 1,3,4 | C 05 F 3/00 <br> 11/00 <br> A 01 G 1/04 |
| | FR - A - 1 016 534 (COFUNA) <br> * Pages 1-2, résumé; page 1, colonne de gauche, lignes 7-12, lignes 20-34; colonne de droite, lignes 9-11 * <br><br>-- | 1-4 | |
| | | | **DOMAINES TECHNIQUES RECHERCHES (Int. Cl. 3)** |
| | FR - A - 917 765 (CHAPUIS) <br> * Page 5, résumé A & B; page 1, lignes 22-44 * <br><br>-- | 1,3,4 | C 05 F 3/00 <br> 11/00 <br> 13/00 <br> A 01 G 1/04 |
| A | FR - A - 814 075 (VILAINE) | | |
| A | FR - A - 977 885 (CONDAT) | | |
| A | FR - A - 805 302 (BLANCS FRANCAIS DE SEMIS "LE CHAMPION) | | |
| A | GB - A - 669 047 (KNAUST) | | |
| A | US - A - 1 691 077 (MORRIS) | | **CATEGORIE DES DOCUMENTS CITES** |

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-12-1980 | STEELANDT |

OEB Form 1503.1    06.78